# EUROPEAN PATENT APPLICATION

(11) **EP 4 420 816 A1**
(43) Date of publication of application: **28.08.2024**
(21) Application number: 22883297.8
(22) Date of filing: 26.09.2022
(51) Int. Cl.: B23G 3/02, B23G 1/16, B23G 5/06

(54) **HOLE MACHINING METHOD, CONTROL DEVICE, AND MACHINE TOOL**

(30) Priority: 21.10.2021 JP 2021172469
(71) Applicant: Makino Milling Machine Co., Ltd., Tokyo 152-8578 (JP)
(72) Inventor: MAEDA, Junichi, Aiko-gun, Kanagawa 243-0303 (JP); KATO, Hiroki, Aiko-gun, Kanagawa 243-0303 (JP)
(74) Representative: McWilliams, David John
(86) International application number: PCT/JP2022/035671
(87) International publication number: WO 2023/067987

(57) **Abstract**

There is provided a hole machining method, using a tap tool (10) which rotates about an axis of rotation (Cr) and which includes a threaded part (14) which has a blade (14a) for machining a threaded groove in a pilot hole (6'), and a non-engaging part (17) which forms a space (20) between itself and the pilot hole (6') in a cross-sectional view in which the axis of rotation (Cr) and a center axis (C6) of the pilot hole (6') are aligned, the method including the steps of machining a threaded groove by rotating the tap tool (10) and advancing it toward a workpiece (8) side in a first state in which the center axis (C6) and the axis of rotation (Cr) are aligned, rotating the tap tool (10) about the axis of rotation (Cr) and moving the tap tool (10) in an interior of the pilot hole (6') toward the non-engaging part (17) side in a direction orthogonal to the axis of rotation (Cr) to transition the tap tool from the first state to a second state in which engagement between the threaded part (14) and the threaded groove is released, and retracting the tap tool (10) from the threaded hole (6).

## Description

### FIELD

The present invention relates to a hole machining method for machining a threaded hole in a pilot hole provided in a workpiece, a control device of a machine tool, and a machine tool.

### BACKGROUND

Patent Literature 1 discloses, as a tap tool used in NC milling machines and machining centers, a tap tool (one-way tap) which has an axis of rotation and which machines a pilot hole into a threaded hole in a state in which the center axis of the pilot hole provided in the workpiece and the axis of rotation are aligned. This tap tool comprises a threaded part having a blade for machining the threaded grooves of the threaded hole, a pad part which is located at the rear in the rotational direction of the blade and which engages with the threaded groove machined by the blade during machining of the threaded groove, and a non-engaging part which forms a space with the threaded hole in a cross-sectional view in which the axis of rotation and the center axis of the threaded hole are aligned. When the tap tool moves in a direction orthogonal to the axis of rotation within the threaded hole from the state in which the axis of rotation and the center axis of the threaded hole are aligned, the space formed between the non-engaging part and the threaded hole has a size which enables simultaneous release of the engagement between the threaded part and the threaded groove and the engagement between the pad part and the threaded groove. As a result, after machining, since the tap tool is disengaged from the threaded grooves of the threaded hole by movement in the direction orthogonal to the axis of rotation, the tap tool can be removed from the threaded hole at high speeds in the axis of rotation direction without rotation, whereby the machining time including the time to return to the machining starting point can be shortened.

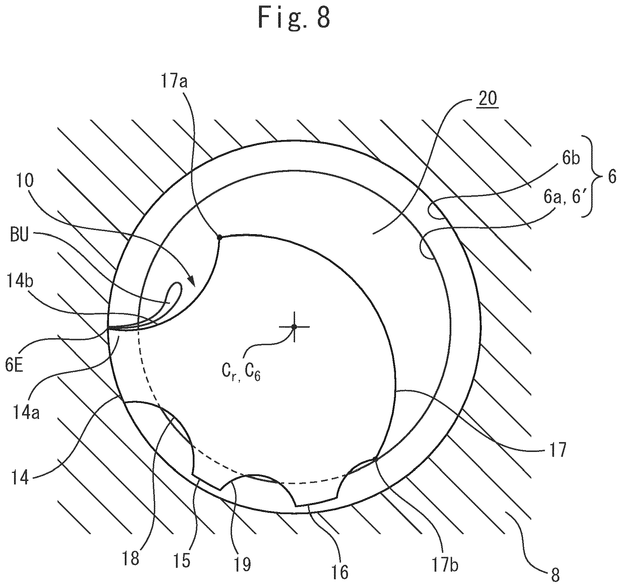

In such a tap tool, though a so-called "stop mark" is not generated at the end of the thread cuts in the manner of a general tap tool for pipe threads, burrs as machining byproducts are likely to be generated, and since the tap tool can be retracted without reverse rotation, a burr BU as shown in FIG. 8 may remain at the threaded end 6E.

### [CITATION LIST]

### [PATENT LITERATURE]

[PTL 1] Japanese Patent No. 6742468

### SUMMARY

### [TECHNICAL PROBLEM]

In light of the circumstances described above, the present invention aims to provide a hole machining method with which the generation of burrs at the end of thread cutting can be prevented during tapping.

### [SOLUTION TO PROBLEM]

According to the present invention, there is provided a hole machining method, using a tap tool which rotates about a first axis line and which comprises a threaded part which has a blade for machining a threaded groove in a pilot hole provided in a workpiece, and a non-engaging part which forms a space between itself and the pilot hole in a cross-sectional view in which the first axis line and a center axis of the pilot hole are aligned, the method comprising the steps of machining a threaded groove in the pilot hole by rotating the tap tool and advancing it toward the workpiece in a first state in which the center axis of the pilot hole and the first axis line are aligned, rotating the tap tool about the first axis line and moving the tap tool in an interior of the pilot hole toward the non-engaging part in a direction orthogonal to the first axis line to transition the tap tool from the first state to a second state in which engagement between the threaded part and the threaded groove is released, and withdrawing the tap tool along the center axis direction of the pilot hole to retract it from the threaded hole.

According to the present invention, there is provided a hole machining method, using a tap tool which rotates about a first axis line serving as a rotation center and which comprises a threaded part which has a blade for machining a threaded groove in a pilot hole provided in a workpiece, and a non-engaging part which forms a space between itself and the pilot hole in a cross-sectional view in which the first axis line and a center axis of the pilot hole are aligned, the method comprising the steps of machining a threaded groove in the pilot hole by rotating the tap tool and advancing it toward the workpiece in a first state in which the center axis of the pilot hole and the first axis line are aligned, and moving the tap tool in an interior of the pilot hole to the non-engaging part side in a direction orthogonal to the first axis line and withdrawing the tap tool along the center axis direction of the pilot hole to retract it from the threaded hole in a second state in which engagement between the threaded part and the threaded groove is released, the method further comprising defining, in the first state, a first virtual circle along an outer peripheral shape of the tap tool, defining, in the second state, a second virtual circle centered on a second axis line of the tap tool aligned with the center axis of the pilot hole, the second virtual circle being smaller than an inner diameter of the pilot hole, including the tap tool inside, and passing near the blade in a cross-sectional view in which the second axis line and the center axis of the pilot hole are aligned, calculating, among intersections between the first virtual circle and the second virtual circle, a rotation intersection severing as an intersection on a far side from the blade in the second state, and rotating the tap tool about a third axis line passing through the rotation intersection and parallel to the first axis line to transition the tap tool from the first state to the second state, and machining a portion of the threaded groove remaining after machining.

According to the present invention, there is further provided a control device for controlling machining by the hole machining method according to the present invention, the control device comprising a memory part for associating and storing, for each tap tool, a position of the rotation intersection on the tap tool relative to the first axis line, and an angle by which the tap tool is rotated when transitioning from the first state to the second state.

According to the present invention, there is further provided a machine tool, comprising the control device according to the present invention, a spindle for holding and rotating the tap tool, and a feed mechanism for moving the spindle relative to the workpiece by means of a Z-axis linear feed part which moves along a direction of a first axis of rotation, an X-axis linear feed part which moves in a direction orthogonal to the first axis of rotation, and a Y-axis linear feed part which moves in a direction orthogonal to both the first axis of rotation and the X-axis linear feed part, wherein machining of the threaded groove in the pilot hole is performed by means of rotation of the spindle and relative motion of the Z-axis linear feed part, and transition of the tap tool from the first state to the second state is movement along a trajectory of an arc centered on the rotation intersection and having the same radius as the second virtual circle by rotating the spindle about the first axis line at an angle stored in the memory part, and simultaneously moving the X-axis linear feed part and the Y-axis linear feed part.

### [ADVANTAGEOUS EFFECTS OF INVENTION]

According to the machining method of the present invention, by rotating the tap tool in the interior of the pilot hole and moving it along a direction orthogonal to the first axis line toward the non-engaging part side, the tap tool is transitioned from the first state to the second state in which engagement between the threaded part of the tap tool and the threaded groove is released, and from this state, the tap tool can be moved (withdrawn) along the direction of the center axis of the pilot hole and retracted from the threaded hole. As a result, the tap tool can be withdrawn from the threaded hole at high speed. Furthermore, the transition from the first state to the second state can be performed by rotating the tap tool about the third axis line passing through the rotation intersection serving as the intersection between the first virtual circle in the first state and the second virtual circle in the second state and parallel to the first axis line. At this time, since the blade of the threaded part of the tap tool can be moved along the arc-shaped trajectory TR, immediately after starting rotation from the first state, the blade can be moved so as to slide on the inner circumference of the threaded hole. As a result, the blade can scrape off burrs as remaining portions (incompletely threaded parts) in the machining of the threaded groove.

Furthermore, according to the control device according to the present invention, the control device which controls machining comprises a memory part, whereby the position of the rotation intersection on the tap tool and the angle at which the tap tool is rotated when transitioning from the first state to the second state can be associated and stored for each tap tool. Thus, hole machining can be performed at high speed regardless of the dimensions of the tap tool and the threaded hole.

Furthermore, according to the machine tool according to the present invention, the transition of the tap tool from the first state to the second state can be movement along the trajectory of an arc having the same radius as the second virtual circle, with the rotation intersection as the center, by rotating the spindle supporting the tap tool about the first axis line at the angle stored in the memory part, and simultaneously moving the X-axis linear feed part and the Y-axis linear feed part. Thus, immediately after starting rotation from the first state, the blade can be slid along the inner periphery of the threaded hole, and the blade can scrape off burrs of machining of the threaded groove. Furthermore, by moving the X-axis linear feed part and Y-axis linear feed part provided in the machine tool as standard, since the blade can be slid along the inner circumference of the threaded hole, highly versatile hole machining can be performed.

### BRIEF DESCRIPTION OF DRAWINGS

FIG. 1 shows a front view of a machine tool used in the machining method according to an embodiment of the present invention and a tap tool attached to a spindle head of the machine tool.
FIG. 2 shows a perspective view of the tap tool of FIG. 1.
FIG. 3 shows a front view of the tap tool of FIG. 1.
FIG. 4 shows a cross-sectional view of a tap tool and a threaded hole machined by the tap tool.
FIG. 5 shows a cross-sectional view of a tap tool and threaded hole displaying the cutting resistance acting on the tap tool shown in FIG. 4, and the principal force and thrust force thereof.
FIG. 6 shows a cross-sectional view of a tap tool and a threaded hole after the tap tool has been rotated and moved from the state shown in FIG. 4.
FIG. 7 shows a flowchart of tapping by the machining method according to an embodiment of the present invention.
FIG. 8 shows a cross-sectional view of a tap tool and a threaded hole with a burr at the end of the thread cutting.

### DESCRIPTION OF EMBODIMENTS

Hereinafter, a machining method, a machine tool, and a control device according to embodiments will be described with reference to the accompanying drawings. Identical or corresponding elements have been assigned the same reference signs, and redundant descriptions thereof have been omitted. In order to facilitate understanding, the scale of drawings may be changed for explanation purposes.

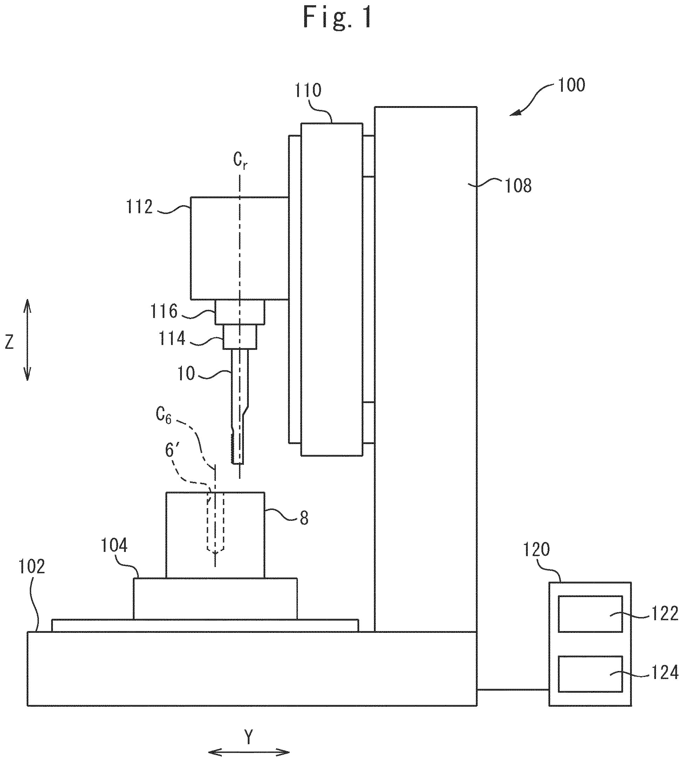

FIG. 1 shows a machine tool 100 according to the present invention, which is a vertical machining center, and a tap tool 10 which is attached to the machine tool 100 and which is used for machining by the machining method according to the present invention. In the drawings, the arrows indicate the longitudinal direction and the vertical direction of the machine when the machine tool 100 is arranged on a horizontal plane. Y in the drawings indicates the machine longitudinal direction (Y-axis direction), and Z indicates the machine vertical direction (Z-axis direction). Furthermore, in the horizontal plane, the direction orthogonal to the Y-axis direction (the direction orthogonal to the paper of FIG. 1) is referred to as the machine transverse direction (X-axis direction).

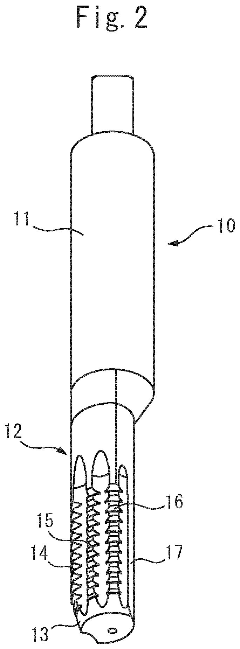

The machine tool 100 comprises a bed 102 as a base which is affixed to the floor of a factory, a Y-axis slider 104, as Y-axis linear feed part, which is provided on the upper surface of the bed 102 so as to be movable in the Y-axis direction, and to which a workpiece 8 as an unmachined workpiece is clamped, and a column 108 which stands from the upper surface of the bed 102 on the machine rear side (the right side in FIG. 1). There are further provided an X-axis slider 110, as an X-axis linear feed part, which is provided on the front surface of the column 108 so as to be movable along the X-axis direction, a Z-axis slider 112, as a Z-axis linear feed part, which is provided on the X-axis slider 110 so as to be movable in the Z-axis direction, and a spindle head 116 which is affixed to the Z-axis slider 112 and which supports a spindle 114 so as to be rotatable about an axis of rotation Cr as a first axis line along the vertical direction. By configuring the machine tool 100 in this manner, the spindle head 116 can be moved and positioned relative to the workpiece 8. The machine tool 100 also comprises a control device 120 for controlling machining by the machine tool 100 and an automatic tool changer (not illustrated). The control device 120 comprises a memory part 122 which stores (saves) the rotation center position (axis of rotation Cr) and rotation angle of the tap tool 10, as will be described later, and an arithmetic part 124 which calculates the orientation of a blade 14a (refer to FIG. 2) of the tap tool 10 and calculates the position of the retraction rotation center Pv as a rotation intersection of the tap tool 10.

The machine tool 100 executes tapping, so-called "synchronized tapping", i.e., machining in which the rotation of the spindle 114 and feeding in the Z-axis direction are synchronized. In this description, the linear movement of the tap tool 10 in the Z-axis direction to perform tapping is also referred to as advancement, and the linear movement of the Z-axis direction to retract the tap tool 10 from the threaded hole 6 is also referred to as withdrawal. Furthermore, in the present embodiment, since the axis of rotation Cr of the spindle 114 and the axis of rotation Cr of the tap tool 10 are always aligned, in the present description, they are assigned the same reference sign.

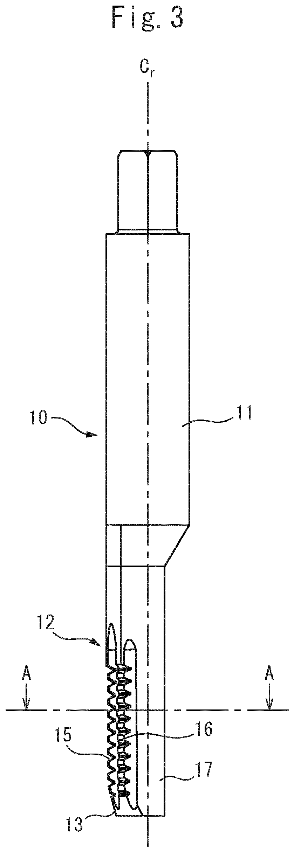

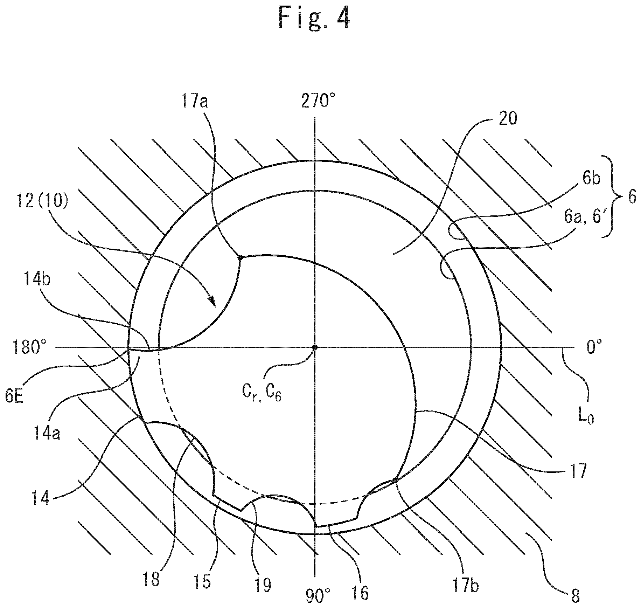

A perspective view of the tap tool 10 according to the present embodiment is shown in FIG. 2, and a front view is shown in FIG. 3. FIG. 4 shows a cross-sectional view of the tap tool 10 and the threaded hole 6 immediately after the threaded hole has been machined, taken along the cutting line AA in FIG. 3. The tap tool 10 performs tapping, i.e., machining to machine the pilot hole 6' into a threaded hole 6, in a state in which the axis of rotation Cr thereof is aligned with the center axis C6 of the pilot hole 6' provided in the workpiece 8. In FIG. 4, the circle indicated by the symbol 6a corresponds to the inner diameter of the pilot hole 6' and the threaded hole 6, and the circle indicated by the symbol 6b corresponds to the diameter of the valleys of the threaded hole 6, i.e., the nominal diameter of the tap tool 10. FIG. 4 shows a cross reference line (hereinafter referred to as "original line") Lo for defining the rotation angle (phase angle) on the rotation surface of the spindle 114. In a cross-sectional view, the rotation angle of the original line in the 3 o'clock direction is defined as 0 degrees, and the rotation angles in the 6 o'clock, 9 o'clock, and 12 o'clock directions are defined as rotation angles of 90 degrees, 180 degrees, and 270 degrees, respectively.

As shown in FIGS. 2 and 3, the tap tool 10 includes a shank part 11 on the proximal side and a machining part 12 on the distal side. A tapered part 13 is provided at the tip of the machining part 12. The machining part 12 has an externally-threaded threaded part 14 which is formed asymmetrically relative to the axis of rotation Cr and which has a plurality of blades 14a for machining the threaded groove of the threaded hole 6, externally threaded pad parts 15, 16 which engage with the threaded groove machined by the blades 14a, and a non-engaging part 17 which does not come into contact with the pilot hole 6' or the threaded hole 6 during machining. The threaded part 14 has a plurality of threads arranged at predetermined thread pitches in the longitudinal direction, and the blades 14a are provided on the front side of each of the plurality of threads in the rotational direction. In the present embodiment, the tap tool 10 is used to form threaded grooves of a triangular thread. Note that though the tap tool 10 is described here as forming threaded grooves of a triangular thread, the tap tool is not limited to this, and the tap tool may be used to form threads of other shapes such as a trapezoidal threads and a square threads.

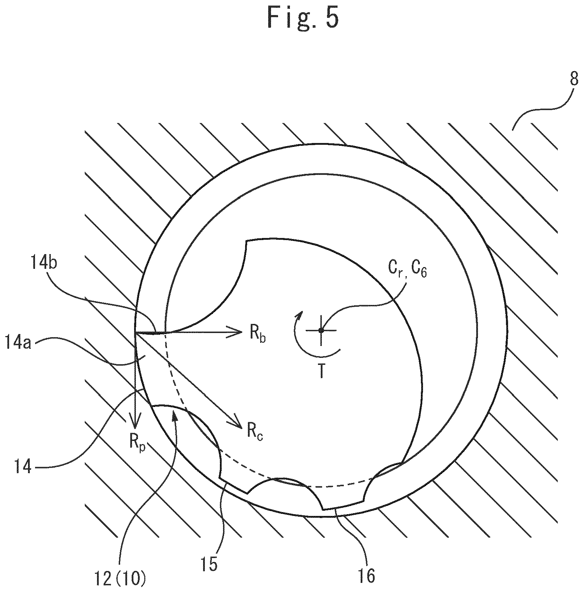

In a typical conventional tap tool, for example, four threaded parts having cutting blades are arranged at 90-degree intervals along the circumferential direction of the tap tool through four grooves for cutting oil distribution extending in the longitudinal direction. In contrast, in the tap tool 10 according to the present embodiment, only one threaded part 14 is arranged. In the embodiment shown in FIG. 4, the one threaded part 14 is arranged in approximately the 8 o'clock (150 degrees) to 9 o'clock (180 degrees) direction. The cutting principle of the blades 14a of the one threaded part 14 is similar to that of conventional tap tools, and as shown in FIG. 5, it has a rake face 14b. Thus, threaded grooves can be machined in the same manner as conventional tap tools. FIG. 5 shows the cutting resistance Rc acting on the tip of the blade 14a of the tap tool 10 as a reaction force against the cutting force during tapping, rotating in the rotational direction T, and the thrust force Rb and principal force Rp thereof in vector notation.

The tap tool 10 according to the present embodiment shown in FIG. 4 is configured to rotate clockwise. The pad parts 15, 16 are formed on the rear side in the rotational direction of the threaded part 14, and in the present embodiment, the first pad part 15 and the second pad part 16 are formed as two pad parts. A first groove 18 is formed between the first pad part 15 and the threaded part 14, and a second groove 19 is formed between the first pad part 15 and the second pad part 16. Cutting fluid can efficiently be supplied to the pad parts 15, 16 via the first groove 18 and second groove 19 formed on the front side of the first pad part 15 and the second pad part 16 in the rotational direction. As a result, the lubrication between the pad parts 15, 16 and the workpiece 8 is improved, and the tap tool 10 and the workpiece 8 can be protected from damage caused by the pad parts 15, 16 rubbing against the surface of the threaded groove formed by the blades 14a.

Though a male thread is formed on each pad part 15, 16 in the same manner as the threaded part 14, the blades 14a are not formed therein. Further, though the radius of the male threads of the pad parts 15, 16 is formed so as to be slightly smaller than the radius of the male threads of the threaded part 14, it is for with a size sufficient to enable screwing into the threaded groove of the threaded hole 6 formed by the blades 14a of the threaded part 14.

As shown in FIG. 5, the pad parts 15, 16 are provided so that the cutting resistance Rc generated during machining is received by the threaded hole 6 and the blades 14a do not become bent. The direction in which the cutting resistance Rc acts is changed by changing the angle of the rake face 14b abutting (contacting) the threaded hole 6. In the present embodiment, the second pad part 16 mainly plays the role of receiving the cutting resistance Rc. The second pad part 16 is formed so as to be located on an extension line of the direction of action of the cutting resistance Rc acting on the blades 14a. The blades 14a are pressed by the cutting resistance Rc, and accordingly, the machining part 12 is pushed outwards along the direction of action of the cutting resistance Rc. At this time, the second pad part 16 of the outwardly-pushed machining part 12 comes into contact with the threaded groove of the threaded hole 6. As a result, the cutting resistance Rc is transmitted to the threaded hole 6, and since the second pad part 16 (machining part 12) is supported by the threaded hole 6, bending of the blades 14a can be prevented or suppressed.

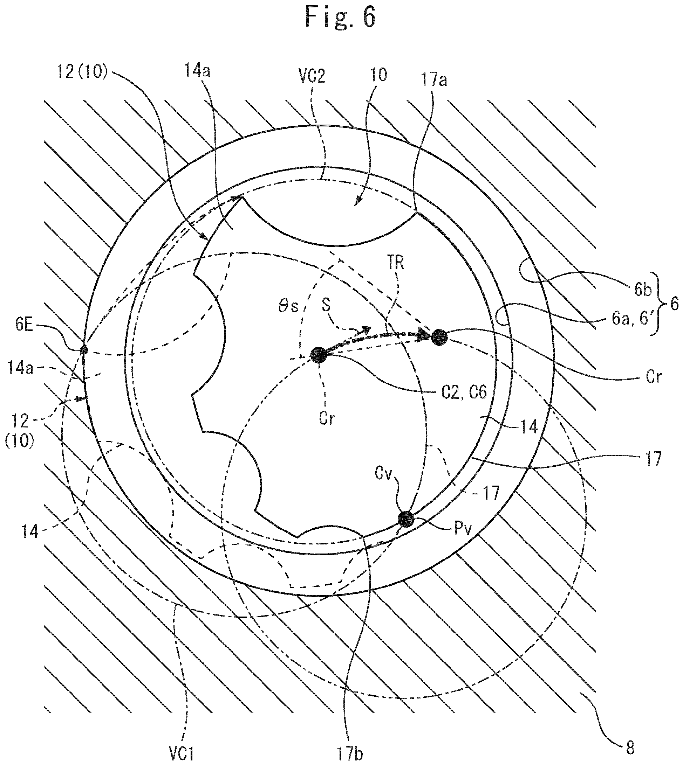

As shown in FIG. 4, the non-engaging part 17 has a curved smooth surface, and is formed into a curved line, and in the present embodiment, an arc shape, connecting points 17a, 17b in a cross-sectional view. In the tap tool 10 according to the present embodiment, since only one threaded part 14 is arranged, space 20 is formed between the non-engaging part 17 and the inner diameter of the threaded hole 6. As shown in FIG. 6, in a state in which the threaded groove machining is completed, which is the first state, regarding the threaded part 14 (indicated by the dotted line) at the hole bottom stop position stopped at the thread cutting end 6E, the tap tool 10 passes through the retraction rotation center Pv and is rotated clockwise by the retraction rotation angle θs about the retraction axis of rotation Cv as the third axis line parallel to the axis of rotation Cr, whereby the threaded part 14 (indicated by the solid line) is rotationally moved from the hole bottom stop position to the tool retractable position (retraction position). Thus, the space 20 (refer to FIG. 4) is formed with a size sufficient to enable the threaded part 14, the first pad part 15, and the second pad part 16, which have been rotationally moved to the retraction position, to be moved to a position where they do not engage with the threaded hole 6, and the tap tool 10 to be withdrawn without rotating backwards. Specifically, the shape of the non-engaging part 17 is defined so that a sufficiently large space 20 can be formed in relation to the threaded hole 6. Note that the size of the space 20 may be made slightly larger with a margin.

During cutting, the space 20 also serves as a path for supplying cutting fluid to the blades 14a and as a path for discharging swarf generated by cutting, and brings about the effect of improving the quality of the machined surface and extending the tool life. By forming the non-engaging part 17 into an arc shape, the cross-sectional area of the tap tool 10 can be increased (the tap tool 10 can be made thicker), and the rigidity of the tap tool 10 can be increased. Note that though the shape of the non-engaging part 17 will be described as being formed in an arc shape in the following description, the shape of the non-engaging part 17 is not limited to this, and the shape of the non-engaging part 17 may be formed into another shape, such as a polygonal shape, when viewed in cross section to the extent that a predetermined rigidity can be secured.

As indicated by the solid line in FIG. 6, the tap tool 10, which has been rotated to the retraction position and for which the engagement between the threaded part 14 and pad parts 15, 16, and the threaded groove has been released, can be withdrawn from the threaded hole 6 by a withdrawal movement in the axis of rotation Cr direction. Since conventional tap tools cannot be disengaged from the threaded groove, it is necessary to withdraw the tap tool while rotating it in the opposite direction. Conversely, since the tap tool 10 according to the present embodiment can be withdrawn simply by a withdrawal movement without rotation, the withdrawal movement can be performed at high speed.

The orientation (phase angle on the rotational surface) of the tap tool 10 at the hole bottom stop position stopped at the end 6E of thread cutting when the machining of the threaded groove has finished is different for each threaded hole 6 since the depths of the threaded holes 6 are different and the rotation speed of the tap tool 10 necessary for machining is also different. Thus, the orientation (phase angle on the rotation plane) of the thread cutting end 6E of the tap tool 10, the position of the retraction axis of rotation Cv (retraction rotation center Pv), and the retractable position of tool rotated clockwise about the retraction axis of rotation Cv by the retraction rotation angle θs in a cross-sectional view also differ for each threaded hole 6 (and for each tap tool 10). Accordingly, when the tap tool 10 is positioned at the machining start point (not illustrated), it is set at a predetermined phase angle relative to the original line Lo of the spindle 114. As a result, the arithmetic part 124 is configured so as to be capable of calculating the phase angle of the tap tool 10 at the hole bottom stop position after machining (between 150 degrees and 180 degrees in FIG. 4) from this predetermined phase angle and the information of the encoder of the motor of the spindle 114, and calculating the retraction rotation angle θs based on the calculated phase angle of tap tool 10.

The rotational movement of the tap tool 10 is performed as follows. As shown in FIG. 6, in the first state in which the threaded groove has been machined, a first virtual circle VC1 is defined along the outer peripheral shape of the tap tool 10 (the dotted line in FIG. 6). In the second state in which the tap tool 10 (solid line in FIG. 6) is rotated to the predetermined retraction position, a second virtual circle VC2 centered on the axis line C2 (second axis line) of the tap tool 10 is defined at a position aligned with the center axis C6 of the pilot hole 6'. The radius of the second virtual circle VC2 is smaller than the inner diameter of the pilot hole 6', and in a cross-sectional view in which the axis line C2 and the center axis C6 of the pilot hole 6' are aligned, it is set so as includes the tap tool 10 in the interior thereof and passes near the blades 14a. Thus, the first virtual circle VC1 and the second virtual circle VC2 intersect at two points (two locations). Among these intersections, the intersection located on the far side from the blades 14a in the second state is set as the center (retraction rotation center Pv) for transitioning (rotating) the tap tool 10 to the second state. Since the second state is defined by the relationship between the cross-sectional shape of the tap tool 10 and the pilot hole 6', the retraction rotation angle θs differs depending on the cross-sectional shape of the tap tool 10. Thus, the retraction rotation angle θs can be stored (saved) in advance in the memory part 122 of the control device 120 in association with the tap tool 10. Furthermore, the threaded hole 6, the thread pitch, the phase angle of the tap tool 10 at the hole bottom stop position categorized for each tap tool 10, and the position (X coordinate and Y coordinate) of the thread cutting end 6E are also stored in the memory part 122 in advance. Note that in the present embodiment, the first virtual circle VC1 and the second virtual circle VC2 have the same relative positions of the centers of the circles relative to the tap tool 10, and the first virtual circle VC1 is a circle centered on the axis line C2 in the first state. The first virtual circle VC1 and the second virtual circle VC2 have the same diameter.

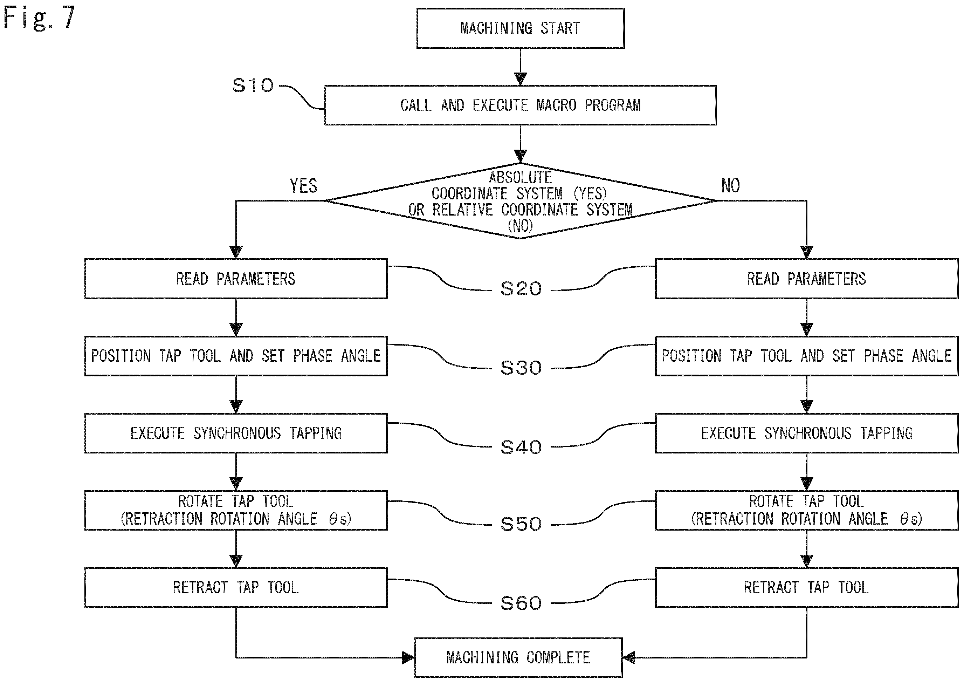

An example of tapping performed by the machining method according to the present embodiment using the machine tool 100 having the control device 120 according to the present embodiment will be described below along the flowchart shown in FIG. 7. The tapping described below is performed by operating the machine tool 100 by executing a macro program stored for each tap tool 10 in the control device 120. In the following description, though tapping performed by a macro program prepared individually for each nominal size of the thread will be described, the invention is not limited to this, and it may also be performed in other manners, such as by issuing a command using M code or G code implemented in the machine tool 100 (control device 120).

First, a machining program for machining the workpiece is executed, and a macro program number corresponding to the desired nominal size of the thread is written in the portion of the machining program where tapping is to be performed. In step S10, when the control device 120 executes the machining program up to the point where the macro program for tapping is written, the macro program number corresponding to the nominal size of the thread is identified, and a macro program which includes as arguments the machining start point at a predetermined position (height) in the Z-axis direction, the depth of the threaded hole 6, the rotational speed of the spindle 114, and the position (X coordinate, Y coordinate) of the pilot hole 6' is called. Specifically, for example, "G65 P0061 X100 Y100 R-100 Z20 S100;" is written in the machining program. G65 represents the macro call command used in the NC (numerical control device) machining program, P represents the macro program number to be called, X represents the X coordinate of the hole center, Y represents the Y coordinate of the hole center, R represents the processing start point in the Z coordinate, Z indicates the length in the Z coordinate direction where thread machining is performed, and S represents the spindle rotation speed (refer to FIG. 6). These arguments are different from parameters described below, and are specified by the operator of the machine tool 100 as desired numerical values. At this time, whether the process of the called macro program is handled in the absolute coordinate system (for example, G90: absolute command) or in the relative coordinate system (for example, G91: incremental command) is confirmed by acquiring the modal state set in the control device 120. Though the machining (steps) of the following macro program differs depending on whether the coordinate values are based on an absolute coordinate system or a relative coordinate system, the machining contents themselves are the same.

Next, in step S20, the parameters input in advance and stored in the memory part 122 of the control device 120 are read in the macro program. Specifically, the parameters include the position (X coordinate, Y coordinate) of the thread cutting end 6E, the position (X coordinate, Y coordinate) of retraction rotation center Pv, the retraction rotation angle θs, the thread pitch, and the like. Since these parameters have different values depending on the thread diameter and thread pitch, it is necessary to store the parameters individually for each nominal size of the thread. In the present embodiment, corresponding parameters are stored in advance for each macro program. Note that these parameters may be written directly into the macro program itself in advance instead of being input. Furthermore, the feed rate in the Z-axis direction (advancing direction) is calculated from the rotation speed of the spindle 114 and the thread pitch.

Next, in step S30, the tap tool 10 is positioned (moved) to the machining start point at the predetermined position (height) in the Z-axis direction. Specifically, the axis of rotation Cr of the spindle 114 of the machine tool to which the tap tool 10 is attached is aligned with the center axis C6 of the pilot hole 6' provided (formed) in the workpiece 8, and the tip of the tap tool 10 is moved (lowered) and positioned at the machining start point. At this time, the phase angle of the tap tool 10 relative to the original line Lo of the spindle 114 is set to a predetermined value.

Next, in step S40, synchronous tapping is performed by synchronizing the rotation speed of the spindle 114 and the calculated feed speed in the advancing direction in accordance with the thread pitch. When the tap tool 10 moves a predetermined distance in the Z-axis direction and reaches the commanded thread depth, the rotation and feeding (advancing movement) of the spindle 114 is stopped. As a result, the pilot hole 6' of the workpiece is machined into the threaded hole 6.

Next, in step S50, the tap tool 10 is rotated by the retraction rotation angle θs about the retraction axis of rotation Cv. Specifically, by rotating the spindle 114 about the axis of rotation Cr by the retraction rotation angle θs stored in the memory part 122 and simultaneously moving the X-axis slider 110 and Y-axis slider 104, the tap tool 10 is transitioned from the first state to the second state along a circular arc trajectory TR with the retraction rotation center Pv as the center and the same radius as the second virtual circle VC2 (arrow S in FIG. 6). As a result, the engagement between the threaded part 14 and the pad parts 15, 16 of the tap tool 10 and the threaded groove of the threaded hole 6 is completely released. When the tap tool 10 is rotated by the retraction rotation angle θs about the retraction axis of rotation Cv, since the blades 14a move along the arc-shaped trajectory TR, the blades 14a immediately after the start of rotation from the first state move so as to slide on the inner circumference of the threaded hole 6. As a result, the blades 14a can scrape (machine) any burrs BU (refer to FIG. 8), which may become a remaining portion (incomplete threaded part) in the machining of the threaded groove.

Next, in step S60, the tap tool 10 is withdrawn upward to the machining start point without being rotated. The feed speed of the spindle 114 in the Z-axis direction during the withdrawal movement can be made twice or more faster than the feed speed during machining, i.e., during the advancing movement. Through these steps, tapping of one threaded hole 6 is completed.

According to the present embodiment, by moving the tap tool 10 inside the pilot hole 6' toward the non-engaging part 17 along the direction orthogonal to the axis of rotation Cr, the tap tool 10 is transitioned from the first state to a second state in which the engagement between the threaded part 14 of the tap tool 10 and the threaded groove is released, and from this state, the tap tool 10 can be moved along the direction of the center axis C6 of the pilot hole 6' and retracted from the threaded hole 6. As a result, the tap tool 10 can be withdrawn from the threaded hole 6 at high speed. Furthermore, the transition from the first state to the second state can be performed by rotating the tap tool 10 about the retraction axis of rotation Cv parallel to the axis of rotation Cr, passing through the retraction rotation center Pv, which is the intersection of the first virtual circle VC1 in the first state and the second virtual circle VC2 in the second state. At this time, since the blades 14a of the threaded part 14 of the tap tool 10 can be moved along the arc-shaped trajectory TR, the blades 14a immediately after the start of rotation from the first state can be moved so as to slide on the inner circumference of the threaded hole 6. As a result, the blades 14a can scrape burrs BU that may become portions remaining after machining (incomplete threaded part) in the threaded groove machining. Though an embodiment in which the tap tool 10 moves toward the non-engaging part 17 inside the pilot hole 6' along the direction (horizontal direction) orthogonal to the axis of rotation Cr has been described, since the threaded groove is a spiral having a predetermined thread pitch determined by the standard, when the tap tool 10 rotates about the retraction axis of rotation Cv, the tap tool 10 is synchronously advanced in a direction parallel to the axis of rotation Cr in accordance with the thread pitch.

Further, according to the present embodiment, the control device 120 for controlling machining comprises the memory part 122, whereby the position of the retraction rotation center Pv on the tap tool 10 and the retraction rotation angle θs for rotating the tap tool 10 when transitioning from the first state to the second state can be associated and stored for each tap tool 10. Thus, hole machining can be performed at high speed regardless of the dimensions of the tap tool 10 and the threaded hole 6.

Furthermore, according to the present embodiment, in the transition of the tap tool 10 from the first state to the second state, the tap tool 10 can be moved along a circular arc trajectory TR having the same radius as the second virtual circle VC2, with the retraction rotation center Pv as the center, by rotating the spindle 114 holding the tap tool 10 about the axis of rotation Cr by the retraction rotation angle θs stored in the memory part 122, and simultaneously moving the X-axis slider 110 and the Y-axis slider 104. Thus, the blades 14a immediately after the start of rotation from the first state, can be slid along the inner circumference of the threaded hole 6, whereby the blades 14a can scrape off burrs BU in the machining of the threaded groove. Furthermore, by, for example, moving the X-axis slider 110 and the Y-axis slider 104 using a command for arc complementation included in the control device 120 of the machine tool 100 as standard, since the blades 14a can be slid along the inner circumference of the threaded hole 6, highly versatile hole machining can be performed.

As described above, the machining method according to the present embodiment can prevent burrs BU from occurring at the thread cutting end in the tapping.

Though the tap tool 10 of the present embodiment has been described as having two pad parts 15, 16, the present invention is not limited to this, and the tap tool may comprise one or three or more pad parts.

Further, though the tap tool 10 of the present embodiment has been described as having the first groove 18 between the first pad part 15 and the threaded part 14, the present invention is not limited to this, and the pad part may be formed continuously with the threaded part without a groove being formed between the pad part and the threaded part.

Furthermore, in the present embodiment, the pad parts 15, 16 have been described as having a radius slightly smaller than the radius of the threaded part 14, but the invention is not limited to this, and the radius of the pad part and the radius of the threaded part may be formed so as to be equal.

### REFERENCE SIGNS LIST

- 6: threaded hole
- 6': pilot hole
- 8: workpiece (part to be machined)
- 10: tap tool
- 14: threaded part
- 14a: blade
- 17: non-engaging part
- 20: space
- 100: machine tool
- 104: Y-axis slider (Y-axis linear feed part)
- 110: X-axis slider (X-axis linear feed part)
- 112: Z-axis slider (Z-axis linear feed part)
- 114: spindle
- 120: control device
- 122: memory part
- 124: arithmetic part
- BU: burr (portion remaining after machining)
- C2: axis line (second axis line)
- C6: center axis
- Cr: axis of rotation (first axis line)
- Cv: retraction axis of rotation (third axis line)
- Pv: retraction rotation center (rotation intersection)
- VC1: first virtual circle
- VC2: second virtual circle
- θs: retraction rotation angle

## Claims

1. A hole machining method, using a tap tool which rotates about a first axis line and which comprises a threaded part which has a blade for machining a threaded groove in a pilot hole provided in a workpiece, and a non-engaging part which forms a space between itself and the pilot hole in a cross-sectional view in which the first axis line and a center axis of the pilot hole are aligned, the method comprising the steps of:
machining a threaded groove in the pilot hole by rotating the tap tool and advancing it toward the workpiece in a first state in which the center axis of the pilot hole and the first axis line are aligned,
rotating the tap tool about the first axis line and moving the tap tool in an interior of the pilot hole toward the non-engaging part in a direction orthogonal to the first axis line to transition the tap tool from the first state to a second state in which engagement between the threaded part and the threaded groove is released, and
withdrawing the tap tool along the center axis direction of the pilot hole to retract it from the threaded hole.

2. A hole machining method, using a tap tool which rotates about a first axis line serving as a rotation center and which comprises a threaded part which has a blade for machining a threaded groove in a pilot hole provided in a workpiece, and a non-engaging part which forms a space between itself and the pilot hole in a cross-sectional view in which the first axis line and a center axis of the pilot hole are aligned, the method comprising the steps of:
machining a threaded groove in the pilot hole by rotating the tap tool and advancing it toward the workpiece in a first state in which the center axis of the pilot hole and the first axis line are aligned, and
moving the tap tool in an interior of the pilot hole to the non-engaging part side in a direction orthogonal to the first axis line and withdrawing the tap tool along the center axis direction of the pilot hole to retract it from the threaded hole in a second state in which engagement between the threaded part and the threaded groove is released, the method further comprising:
defining, in the first state, a first virtual circle along an outer peripheral shape of the tap tool,
defining, in the second state, a second virtual circle centered on a second axis line of the tap tool aligned with the center axis of the pilot hole, the second virtual circle being smaller than an inner diameter of the pilot hole, including the tap tool inside, and passing near the blade in a cross-sectional view in which the second axis line and the center axis of the pilot hole are aligned,
calculating, among the intersections between the first virtual circle and the second virtual circle, a rotation intersection severing as an intersection on a far side from the blade in the second state, and
rotating the tap tool about a third axis line passing through the rotation intersection and parallel to the first axis line to transition the tap tool from the first state to the second state, and machining a portion of the threaded groove remaining after machining.

3. The hole machining method according to claim 2, further comprising:
calculating, from a depth to which the tap tool is inserted into the pilot hole, an orientation of the blade on a rotation plane about the first axis line of the tap tool when machining of the threaded groove in the pilot hole is complete, and
calculating a position of the rotation intersection of the tap tool.

4. The hole machining method according to claim 2, wherein a shape of the non-engaging part of the tap tool is a circular arc shape inscribed in and overlapping on the first virtual circle and/or the second virtual circle in a cross-sectional view.

5. A control device for controlling machining by the machining method according to any one of claims 2 to 4, the control device comprising:
a memory part for associating and storing, for each tap tool, a position of the rotation intersection on the tap tool relative to the first axis line, and
an angle by which the tap tool is rotated when transitioning from the first state to the second state.

6. A machine tool, comprising:
the control device according to claim 5,
a spindle for holding and rotating the tap tool, and
a feed mechanism for moving the spindle relative to the workpiece by means of a Z-axis linear feed part which moves along a direction of a first axis of rotation, an X-axis linear feed part which moves in a direction orthogonal to the first axis of rotation, and a Y-axis linear feed part which moves in a direction orthogonal to both the first axis of rotation and the X-axis linear feed part, wherein
machining of the threaded groove in the pilot hole is performed by means of rotation of the spindle and relative motion of the Z-axis linear feed part, and
transition of the tap tool from the first state to the second state is movement along a trajectory of an arc centered on the rotation intersection and having the same radius as the second virtual circle by rotating the spindle about the first axis line at an angle stored in the memory part, and simultaneously moving the X-axis linear feed part and the Y-axis linear feed part.
